# EUROPEAN PATENT APPLICATION

(11) **EP 3 375 798 A1**
(43) Date of publication of application: **19.09.2018**
(21) Application number: 17161665.9
(22) Date of filing: 17.03.2017
(51) Int. Cl.: C08F 259/08, C08F 214/18, C08F 2/22

(54) **METHOD FOR MAKING FLUOROPOLYMERS**

(71) Applicant: Solvay Specialty Polymers Italy S.p.A., 20021 Bollate (MI) (IT)
(72) Inventor: MERLO, Luca, 22030 MONTORFANO (CO) (IT); OLDANI, Claudio, 20015 Parabiago (MI) (IT); MARRANI, Alessio, 23900 LECCO (LC) (IT); D'APRILE, Fiorenza, 20834 Nova Milanese (MB) (IT); KAPELYUSHKO, Valeriy, 15121 Alessandria (AL) (IT)
(74) Representative: Benvenuti, Federica

(57) **Abstract**

The invention pertains to a method of making fluoropolymer dispersions using certain reactive oligomeric dispersing agents, of given molecular weight, comprising I and/or Br, and a plurality of ionisable groups selected from the group consisting of -SO₃Xₐ , -PO₃Xₐ and -COOXₐ, whereas Xₐ is H, an ammonium group or a monovalent metal, and to fluoropolymer dispersions therefrom.

## Description

### Technical Field

The present invention pertains to a method of making fluoropolymer dispersions using certain reactive oligomeric dispersing agents, and to fluoropolymer dispersions therefrom.

### Background Art

Fluoropolymers, i.e. polymers having a fluorinated backbone, have been long known and have been used in a variety of applications because of several desirable properties such as heat resistance, chemical resistance, weatherability, UV-stability etc.

A frequently used method for producing fluoropolymers involves aqueous emulsion polymerization of one or more fluorinated monomers generally involving the use of fluorinated surfactants. Frequently used fluorinated surfactants include perfluorooctanoic acids and salts thereof, in particular ammonium perfluorooctanoic acid.

Recently, perfluoroalkanoic acids having 8 or more carbon atoms have raised environmental concerns. For instance, perfluoroalkanoic acids have been found to show bioaccumulation. Accordingly, efforts are now devoted to phasing out from such compounds and methods have been developed to manufacture fluoropolymer products using alternative surfactants having a more favourable toxicological profile.

Several approaches have been recently pursued to this aim, typically involving fluorosurfactants comprising a perfluoroalkyl chain interrupted by one or more catenary oxygen atoms, said chain having an ionic carboxylate group at one of its ends.

Examples of these compounds which are endowed with improved bioaccumulation profile over perfluoro alkanoic acids having 8 or more carbon atoms can be found notably in US 2007276103 (3M INNOVATIVE PROPERTIES CO) 29.11.2007 , US 2007015864 (3M INNOVATIVE PROPERTIES CO) 18.01.2007 , US 2007015865 (3M INNOVATIVE PROPERTIES CO) 18.01.2007 , US 2007015866 (3M INNOVATIVE PROPERTIES CO) 18.01.2007.

Generally speaking, while all these approaches targeting alternative fluorinated surfactants which desirably show lower bioaccumulation/bio-persistence than perfluoro alkanoic acids having 8 or more carbon atoms still may involve the use of fluorocompounds which may be highly fluorinated, and/or which may have a molecular weight low enough to possibly enable them to permeate live cells' membranes, and which may nonetheless have a certain (bio-)persistence.

Additional efforts have been hence undertaken for developing solutions where substantially no such possibly harmful compounds are used, but wherein the stabilizing/dispersing agent system used be such that polymerization can be carried out in a convenient and cost effective way, using same equipment commonly used in the aqueous emulsion polymerization of fluorinated monomers with traditional surfactants, achieving reasonable productivities and acceptable latex stability.

### Disclosure of Invention

It has been found that certain reactive dispersants, as below detailed, are effective in the aqueous emulsion polymerization of fluoromonomers, in particular of tetrafluoroethylene and/or of vinylidene fluoride, even when used without the addition of other surfactants, including fluorinated surfactants, enabling appreciable polymerization kinetics and providing stable dispersions.

Thus, in one aspect, the invention relates to a method for making a fluoropolymer comprising emulsion polymerizing one or more than one fluorinated monomer in an aqueous medium wherein said aqueous emulsion polymerization is carried out in an aqueous medium in the presence of at least one radical initiator and at least one reactive oligomeric dispersant [dispersant (D)], said dispersant (D):
- comprising a backbone chain comprising recurring units derived from one or more ethylenically unsaturated monomers,
- having a number averaged molecular weight of at least 3 000 and of at most 30 000,
- comprising at least one iodine or bromine atom; and
- comprising a plurality of ionisable groups selected from the group consisting of -SO₃Xₐ, -PO₃Xₐ and -COOXₐ, whereas Xₐ is H, an ammonium group or a monovalent metal,
wherein the said dispersant (D) is used in an amount of 0.01% by weight and 3.50% by weight, based on the total weight of the aqueous medium.

In the method of making a fluoropolymer, one or more dispersants (D) are used in the aqueous emulsion polymerization of one or more fluorinated monomers, in particular gaseous fluorinated monomers.

By gaseous fluorinated monomers is meant monomers that are present as a gas under the polymerization conditions. In a particular embodiment, the polymerization of the fluorinated monomers is started in the presence of the dispersants (D), i.e. the polymerization is initiated in the presence of the same. The amount of dispersants (D) used may vary within the mentioned range depending on desired properties such as amount of solids, monomers' conversion, etc.... Generally the amount of dispersant (D) will be of at least 0.05% wt, preferably of at least 0.10 % wt and advantageously at most 3.20 % wt, preferably at most 3.00 % wt, with respect to the total weight of the aqueous medium. A practical range is between 0.15% wt and 2.75% wt, with respect to the total weight of the aqueous medium.

While the polymerization is generally initiated in the presence of the dispersant (D), it is not excluded to add further dispersant (D) during the polymerization, although such will generally not be necessary.

As above explained dispersant (D) is an oligomer possessing a number averaged molecular weight of beyond 3 000, and yet a number averaged molecular weight of at most 30 000.

The choice of an averaged molecular weight of beyond 3000 is particularly advantageous for ensuring that dispersant (D) has a toxicological profile such not to be able to penetrate live cells' membranes.

On the other side, upper boundaries for the number averaged molecular weight of dispersant (D) is specifically critical to ensure dispersant is behaving appropriately as a dispersing agent, but yet, its final weight fraction in fluoropolymer to be manufacture is negligible.

Preferably the dispersant (D) possesses a number averaged molecular weight of at least 4000, preferably of at least 5000 and/or advantageously of at most 25 000, preferably of at most 20 000.

Particularly good results have been obtained with dispersants possessing a number averaged molecular weight of from 5 000 to 15 000.

As said dispersant (D) comprises at least one iodine or bromine atom; the selection among iodine/bromine is not particularly critical, provided that they ensure adequate reactivity in polymerization. Iodine is nevertheless generally preferred.

These iodine or bromine atom(s) can be comprised in the dispersant (D) as pending groups bound to the backbone chain of the dispersant (D), advantageously by means of incorporation in the dispersant (D) backbone chain of recurring units derived from monomers having iodine and/or bromine atoms and/or can be comprised in the dispersant (D) as terminal groups of said dispersant (D) backbone chain.

When these iodine or bromine atoms are comprised in the dispersant (D) as pending groups bound to the backbone of the dispersant (D), said dispersant (D) generally comprises recurring units derived from iodine or bromine containing monomers of formula: 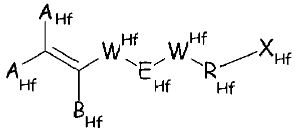 wherein each of A_{Hf}, equal to or different from each other and at each occurrence, is independently selected from F, and Cl; B_{Hf} is any of F, Cl, and OR^{Hf}_{B}, wherein R^{Hf}_{B} is a branched or straight chain perfluoroalkyl radical ; each of W^{Hf} equal to or different from each other and at each occurrence, is independently a covalent bond or an oxygen atom; E_{Hf} is a perfluorinated divalent group having 2 to 10 carbon atom; R_{Hf} is a branched or straight chain perfluorinated alkyl radical; and X_{Hf} is a halogen atom selected from the group consisting of Iodine and Bromine.

Among these iodine or bromine-containing monomers, preferred monomers are those selected from the group consisting of:
(M-A) iodine-containing perfluorovinylethers of formula: 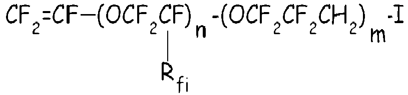 with m being an integer from 0 to 5 and n being an integer from 0 to 3, with the provisio that at least one of m and n is different from 0, and R_{fi} being F or CF₃; (as notably described in patents US 4745165 (AUSIMONT SPA) 17/05/1988 , US 4564662 (MINNESOTA MINING) 14/01/1986 and EP 199138 A (DAIKIN IND LTD) 29/10/1986); and
(M-B) iodine-containing ethylenically unsaturated compounds of formula:

   CF₂=CF-(CF₂CF₂)ₚ-I
wherein p is an integer from 1 to 5;
(CSM-1C) bromo and/or iodo alpha-olefins containing from 2 to 10 carbon atoms such as bromotrifluoroethylene or bromotetrafluorobutene described, for example, in US 4035565 **(DU** PONT) 12/07/1977 or other compounds bromo and/or iodo alpha-olefins disclosed in US 4694045 (DU PONT) 15/09/1987.

According to preferred embodiment's, the iodine and/or bromine atoms are comprised as terminal groups of the dispersant (D) backbone chain; the dispersant (D) according to this embodiment is generally obtained through the use, during dispersant (D) polymerization manufacture, of anyone of:
- iodinated and/or brominated chain-transfer agent(s); suitable chain-chain transfer agents are typically those of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2; and
- alkali metal or alkaline-earth metal iodides and/or bromides, such as described notably in patent US 5173553 (AUSIMONT SRL) 22/12/1992 .

The dispersant (D) comprises advantageously iodine and/or bromine atoms in an amount of 0.01 to 10% wt, with respect to the total weight of the dispersant (D).

According to this embodiment, for ensuring acceptable reactivity it is generally understood that the content of iodine and/or bromine in the dispersant (D) should be of at least 0.05 % wt, preferably of at least 0.1 % weight, more preferably of at least 0.15 % weight, with respect to the total weight of dispersant (D).

On the other side, amounts of iodine and/or bromine not exceeding preferably 7 % wt, more specifically not exceeding 5 % wt, or even not exceeding 4 % wt, with respect to the total weight of dispersant (D), are those generally selected for avoiding side reactions and/or detrimental effects on final properties of the fluoropolymer to be manufactured.

An optimum amount of iodine and/or bromine in dispersant (D) is advantageously of from 0.5 to 1.2 % wt, with respect to the total weight of dispersant (D).

It is nevertheless preferred for dispersant (D) to comprise one or more than one iodine atom.

Dispersant (D) comprises a plurality of ionisable groups selected from the group consisting of -SO₃Xₐ, -PO₃Xₐ and -COOXₐ, whereas Xₐ is H, an ammonium group or a monovalent metal.

The amount of said ionisable groups in dispersant (D) is generally of at least 0.15, preferably at least 0.50, more preferably at least 0.75 meq/g, with respect to the weight of dispersant (D). There's no substantial limitation as per the maximum amount of the said ionisable groups comprised in dispersant (D). It is generally understood that the said ionisable groups are generally present in an amount of at most 2.50 meq/g, preferably at most 2.20 meq/g, more preferably at most 2.00 meq/g.

Generally, dispersant (D) comprises said ionisable groups as pendant groups covalently bound to recurring units derived from a functional monomer (monomer (X), herein below).

Dispersant (D) may consist essentially of recurring units derived from one or more than one monomer (X), as above detailed, or can be a copolymer comprising recurring units derived from one or more than one monomer (X) and recurring units derived from one or more than one additional monomer different from monomer (X).

Generally, monomer (X) is a fluorinated monomer; one or more than one additional monomer different from monomer (X) may be a fluorinated monomer. The expression 'fluorinated monomer' is intended to encompass ethylenically unsaturated monomers comprising at least one fluorine atom.

According to certain embodiment's of the invention, dispersant (D) is an oligomer comprising at least one -SO₃Xₐ group, as above detailed, that is to say a dispersant (D_{SO3X}).

Dispersant (D_{SO3X}) may consist essentially of recurring units derived from one or more than one monomer (X), as above detailed, or can comprise recurring units derived from one or more than one monomer (X) and recurring units derived from one or more than one additional monomer different from monomer (X).

Suitable preferred dispersants (D_{SO3X}) comprising at least one -SO₃Xₐ group are those oligomers comprising recurring units deriving from at least one ethylenically unsaturated fluorinated monomer containing at least one -SO₂X group, with X being -OXₐ, with Xₐ as above; and recurring units deriving from at least one ethylenically unsaturated fluorinated monomer free from -SO₂X group, as above detailed (monomer (B), hereinafter).

The expression 'recurring units deriving from' in connection with a particular monomer is intended to encompass recurring units as derived/directly obtained from polymerizing the said particular monomer, and corresponding recurring units derived/obtained by further modification/post-treatment of the same, e.g. by hydrolysis.

The phrase "at least one monomer" is used herein with reference to monomers of both type (A) and (B) to indicate that one or more than one monomer of each type can be present in the dispersant (D_{SO3X}). Hereinafter the term monomer will be used to refer to both one and more than one monomer of a given type.

Non limiting examples of suitable monomers (A) are:
- sulfonyl halide fluoroolefins of formula: CF₂=CF(CF₂)ₚSO₂X, with X being OXₐ, , with Xₐ as above detailed, F or Cl, preferably F, wherein p is an integer between 0 and 10, preferably between 1 and 6, more preferably p is equal to 2 or 3;
- sulfonyl halide fluorovinylethers of formula: CF₂=CF-O-(CF₂)ₘSO₂X, with X being OXₐ, with Xₐ as above detailed, F or Cl, preferably F, wherein m is an integer between 1 and 10, preferably between 1 and 6, more preferably between 2 and 4, even more preferably m equals 2;
- sulfonyl fluoride fluoroalkoxyvinylethers of formula: CF₂=CF-(OCF₂CF(R F₁))_{w}-O-CF₂(CF(R_{F2}))_{y}SO₂X
with X being OXₐ, with Xₐ as above detailed, F or Cl, preferably F, wherein w is an integer between 0 and 2, R_{F1} and R_{F2}, equal or different from each other, are independently F, Cl or a C₁₋C₁₀ fluoroalkyl group, optionally substituted with one or more ether oxygens, y is an integer between 0 and 6; preferably w is 1, R_{F1} is -CF₃, y is 1 and R_{F2} is F; - sulfonyl halide aromatic fluoroolefins of formula CF₂=CF-Ar-SO₂X with X being OXₐ, with Xₐ as above detailed, F or Cl, preferably F, wherein Ar is a C₅₋C₁₅ aromatic or heteroaromatic group.

Preferably monomer (A) is selected from the group of the sulfonyl fluoride fluorovinylethers of formula CF₂=CF-O-(CF₂)ₘ-SO₂F, wherein m is an integer between 1 and 6, preferably between 2 and 4.

More preferably monomer (A) is CF₂=CFOCF₂CF₂-SO₂F (perfluoro-5-sulfonylfluoride-3-oxa-1-pentene).

Non limiting examples of suitable ethylenically unsaturated fluorinated monomers of type (B) are:
- C₂-C₈ perfluoroolefins, such as tetrafluoroethylene (TFE), hexafluoropropylene (HFP), perfluoroisobutylene;
- C₂-C₈ hydrogen-containing fluoroolefins, such as trifluoroethylene (TrFE), vinylidene fluoride (VDF), vinyl fluoride (VF), pentafluoropropylene, and hexafluoroisobutylene;
- C₂-C₈ chloro- and/or bromo- and/or iodo-containing fluoroolefins, such as chlorotrifluoroethylene (CTFE) and bromotrifluoroethylene;
- fluoroalkylvinylethers of formula CF₂=CFOR_{f1}, wherein R_{f1} is a C₁-C₆ fluoroalkyl, e.g. -CF₃, -C₂F₅, -C₃F₇;
- fluorooxyalkylvinylethers of formula CF₂=CFOX₀, wherein X₀ is a C₁-C₁₂ fluorooxyalkyl group comprising one or more than one ethereal oxygen atom, including notably fluoromethoxyalkylvinylethers of formula CF₂ =CFOCF₂OR_{f2}, with R_{f2} being a C₁-C₃ fluoro(oxy)alkyl group, such as -CF₂CF₃, -CF₂CF₂-O-CF₃ and -CF₃ 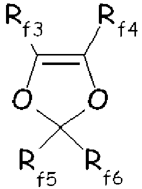 wherein each of R_{f3}, R_{f4}, R_{f5}, R_{f6}, equal or different each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃.

Preferably monomer (B) is selected among:
- C₂-C₈ perfluoroolefins selected from tetrafluoroethylene (TFE) and/or hexafluoropropylene (HFP);
- C₂-C₈ hydrogen-containing fluoroolefins, selected from trifluoroethylene (TrFE), vinylidene fluoride (VDF), and vinyl fluoride (VF); and
- mixtures thereof.

According to these embodiment's, preferably, dispersant (D_{SO3X}) is a fluorinated oligomer comprising a plurality of -SO₃Xₐ functional groups, and consisting essentially of recurring units deriving from at least one ethylenically unsaturated fluorinated monomer (A) containing at least one sulfonyl fluoride functional group and from at least one ethylenically unsaturated fluorinated monomer (B).

End-groups, impurities, defects and other spurious units in limited amount (less than 1 % moles, with respect to total moles of recurring units) may be present in the preferred polymer, in addition to the listed recurring units, without this affecting substantially the properties of the dispersant (D_{SO3X}).

According to certain embodiments, at least one monomer (B) of the dispersant (D_{SO3X}) is TFE. Dispersants (D_{SO3X}) wherein at least one monomer (B) is TFE will be hereby referred to as dispersants (D^{TFE}_{SO3X}).

Preferred dispersants (D^{TFE}_{SO3X}) are selected from oligomers consisting essentially of:
(1) recurring units derived from tetrafluoroethylene (TFE), these recurring units (1) being generally in an amount of 50 to 99 % moles, preferably 52 to 98 % moles, with respect to total moles of dispersant (D^{TFE}_{SO3X});
(2) recurring units derived from at least one monomer selected from the group consisting of:
   (j) sulfonyl halide fluorovinylethers of formula: CF₂=CF-O-(CF₂)ₘSO₂X, with X being OXₐ, with Xₐ as above detailed, F or Cl, preferably F, wherein m is an integer between 1 and 10, preferably between 1 and 6, more preferably between 2 and 4, even more preferably m equals 2;
   (jj) sulfonyl fluoride fluoroalkoxyvinylethers of formula: CF₂=CF-(OCF₂ CF(R_{F1}))_{w}-O-CF₂(CF(R_{F2}))_{y}SO₂X
      with X being OXₐ, with Xₐ as above detailed, F or Cl, preferably F, wherein w is an integer between 0 and 2, R_{F1} and R_{F2}, equal or different from each other, are independently F, Cl or a C₁₋C₁₀ fluoroalkyl group, optionally substituted with one or more ether oxygens, y is an integer between 0 and 6; preferably w is 1, R_{F1} is -CF₃, y is 1 and R_{F2} is F; and
   (jjj) mixtures thereof;
      these recurring units (2) being generally in an amount of 1 to 50 % moles, preferably 2 to 48 % moles, with respect to total moles of dispersant (D^{TFE} _{SO3X}) ; and
(3) optionally, recurring units derived from at least one hydrogenate and/or fluorinated monomer different from TFE, preferably a perfluorinated monomer, generally selected from the group consisting of hexafluoropropylene, perfluoroalkylvinylethers of formula CF₂=CFOR'_{f1}, wherein R'_{f1} is a C₁-C₆ perfluoroalkyl, e.g. -CF₃, -C₂F₅, -C₃F₇; perfluoro-oxyalkylvinylethers of formula CF₂=CFOR'_{O1}, wherein R'_{O1} is a C₂-C₁₂ perfluoro-oxyalkyl having one or more ether groups, including e.g. perfluoroalkyl-methoxy-vinylethers of formula CF₂=CFOCF₂OR'_{f2} in which R'_{f2} is a C₁-C₆ perfluoroalkyl, e.g. -CF₃, -C₂F₅, -C₃F₇ or a C₁-C₆ perfluorooxyalkyl having one or more ether groups, like -C₂F₅-O-CF₃; these recurring units (3) being generally in an amount of 0 to 45 % moles, preferably 0 to 40 % moles, with respect to total moles of dispersant (D^{TFE} _{SO3X}).

According to certain embodiment's, the preferred dispersant (D^{TFE}_{SO3X}) generally consists essentially of:
(1) from 55 to 95 % moles, preferably from 65 to 93 % moles of recurring units derived from TFE;
(2) from 5 to 45 % moles, preferably from 7 to 35 % moles of recurring units derived from -SO₂X groups-containing monomer(s) (2), as above detailed;
(3) from 0 to 25 % moles, preferably from 0 to 20 % moles of recurring units derived from fluorinated monomer(s) different from TFE (3), as above detailed.

According to certain other embodiments, at least one monomer (B) of the dispersant (D_{SO3X}) is VDF. Dispersants (D_{SO3X}) wherein at least one monomer (B) is VDF will be hereby referred to as dispersants (D^{VDF}_{SO3X}).

Preferred dispersants (D^{VDF}_{SO3X}) are selected from oligomers consisting essentially of:
(1) recurring units derived from vinylidene fluoride (VDF), these recurring units (1) being generally in an amount of 55 to 99 % moles, preferably 75 to 95 % moles, with respect to total moles of dispersant (D^{VDF}_{SO3X});
(2) recurring units derived from at least one monomer selected from the group consisting of:
   (j) sulfonyl halide fluorovinylethers of formula: CF₂=CF-O-(CF₂)ₘSO₂X, with X being OXₐ, with Xₐ as above detailed, F or Cl, preferably F, wherein m is an integer between 1 and 10, preferably between 1 and 6, more preferably between 2 and 4, even more preferably m equals 2;
   (jj) sulfonyl fluoride fluoroalkoxyvinylethers of formula: CF₂=CF-(OCF₂ CF(R_{F1}))_{w}-O-CF₂(CF(R_{F2}))_{y}SO₂X
      with X being OXₐ, with Xₐ as above detailed, F or Cl, preferably F, wherein w is an integer between 0 and 2, R_{F1} and R_{F2}, equal or different from each other, are independently F, Cl or a C₁₋C₁₀ fluoroalkyl group, optionally substituted with one or more ether oxygens, y is an integer between 0 and 6; preferably w is 1, R_{F1} is -CF₃, y is 1 and R_{F2} is F; and
   (jjj) mixtures thereof;
   these recurring units (2) being generally in an amount of 1 to 45 % moles, preferably 5 to 25 % moles, with respect to total moles of dispersant (D^{VDF} _{SO3X}) ; and
(3) optionally, recurring units derived from at least one hydrogenated monomer or fluorinated monomer different from VDF; these recurring units (3) being generally in an amount of 0 to 25 % moles, preferably 0 to 15 % moles, with respect to total moles of dispersant (D^{VDF}_{SO3X}).

According to certain embodiment's, the preferred dispersant (D^{VDF}_{SO3X}) generally consists essentially of:
(1) from 55 to 95 % moles, preferably from 70 to 92 % moles of recurring units derived from VDF;
(2) from 5 to 30 % moles, preferably from 8 to 20 % moles of recurring units derived from -SO₂X groups-containing monomer(s) (2), as above detailed;
(3) from 0 to 15 % moles, preferably from 0 to 10 % moles of recurring units derived from hydrogenated or fluorinated monomer(s) different from VDF (3), as above detailed.

The dispersants (D_{SO3X}) may be prepared by any polymerization process known in the art. Suitable processes for the preparation of such polymers are for instance those described in US 4940525 (THE DOW CHEMICAL COMPANY) 10/07/1990 , EP 1323751 A (SOLVAY SOLEXIS SPA) 2/07/2003 , EP 1172382 A (SOLVAY SOLEXIS SPA) 16/11/2002.

The aqueous emulsion polymerization may be carried out at a temperature between 10°C to 150°C, preferably 20°C to 130°C and the pressure is typically between 2 and 60 bar, in particular 5 to 45 bar.

The reaction temperature may be varied during the polymerization e.g. for influencing the molecular weight distribution, i.e., to obtain a broad molecular weight distribution or to obtain a bimodal or multimodal molecular weight distribution.

The pH of the polymerization media may be in the range of pH 2-11, preferably 3-10, most preferably 4-10.

As said, the method of the invention is carried out in an aqueous medium in the presence of at least one radical initiator, i.e. any of the initiators known for initiating a free radical polymerization of ethylenically unsaturated monomers. Suitable radical initiators include notably peroxides and azo compounds and redox based initiators. Specific examples of peroxide initiators include, hydrogen peroxide, sodium or barium peroxide, diacylperoxides such as diacetylperoxide, disuccinyl peroxide, dipropionylperoxide, dibutyrylperoxide, dibenzoylperoxide, di-ter-butyl-peroxide, benzoylacetylperoxide, diglutaric acid peroxide and dilaurylperoxide, and further per-acids and salts thereof such as e.g. ammonium, sodium or potassium salts. Examples of per-acids include peracetic acid. Esters of the peracid can be used as well and examples thereof include tert.-butylperoxyacetate and tert.-butylperoxypivalate. Examples of inorganic initiators include for example ammonium-, alkali- or earth alkali- salts of persulfates, permanganic or manganic acid or manganic acids. A persulfate initiator, e.g. ammonium persulfate (APS), can be used on its own or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include hydroxymethane sodium sulfinate (Rongalite) or fluoroalkyl sulfinates such as those disclosed in US 5285002. The reducing agent typically reduces the half-life time of the persulfate initiator. Additionally, a metal salt catalyst such as for example copper, iron or silver salts may be added.

The amount of initiator may be between 0.01% by weight (based on the fluoropolymer to be produced) and 1% by weight. Still, the amount of initiator is preferably between 0.05 and 0.5% by weight and more preferably between 0.05 and 0.3% by weight, based on the fluoropolymer to be produced.

The aqueous emulsion polymerization can be carried out in the presence of other materials, such as notably paraffin waxes, buffers and, if desired, complex-formers or chain-transfer agents.

Examples of chain transfer agents that can be used include dimethyl ether, methyl t-butyl ether, alkanes having 1 to 5 carbon atoms such as ethane, propane and n-pentane, halogenated hydrocarbons such as CCl₄, CHCl₃ and CH₂Cl₂ and hydrofluorocarbon compounds such as CH₂F-CF₃ (R134a). Additionally esters like ethylacetate, malonic esters can be effective as chain transfer agent in the method of the invention.

Further, the aqueous emulsion polymerization of the method of the invention can be carried out in the presence of certain fluorinated fluids deprived of ionisable groups, typically enabling formation of nanosized droplets (average size of less than 50 nm, preferably of less than 30 nm), and advantageously stabilized in aqueous dispersion by the presence of the dispersant (D).

Should the method of the invention be carried out in the presence of a fluorinated fluid, as above detailed, it may be preferable to first homogenously mix the dispersant (D) and said fluid in an aqueous medium, and then feeding the so obtained aqueous mixture of the dispersant (D) and said fluid in the polymerization medium. This technique is particularly advantageous as this pre-mix can advantageously enable manufacture of an emulsion of said fluid in an aqueous phase comprising the dispersant (D), wherein this emulsion comprises dispersed droplets of said fluid having an average size of preferably less than 50 nm, more preferably of less than 40 nm, even more preferably of less than 30 nm.

Fluids which can be used according to this embodiment are preferably (per)fluoropolyethers comprising recurring units (R1), said recurring units comprising at least one ether linkage in the main chain and at least one fluorine atom (fluoropolyoxyalkene chain). Preferably the recurring units R1 of the (per)fluoropolyether are selected from the group consisting of:
(I) -CFX-O-, wherein X is -F or -CF₃; and
(II) -CF₂-CFX-O-, wherein X is -F or -CF₃; and
(III) -CF₂-CF₂-CF₂-O-; and
(IV) -CF₂-CF₂-CF₂-CF₂-O-; and
(V) -(CF₂)ⱼ-CFZ-O- wherein j is an integer chosen from 0 and 1 and Z is a fluoropolyoxyalkene chain comprising from 1 to 10 recurring units chosen among the classes (I) to (IV) here above; and mixtures thereof.

Should the (per)fluoropolyether comprise recurring units R1 of different types, advantageously said recurring units are randomly distributed along the fluoropolyoxyalkene chain.

Preferably the (per)fluoropolyether is a compound complying with formula (I-p) here below :

T₁-(CFX)ₚ-O-R_{f}-(CFX)_{p'}-T₂ (I-p)

wherein :
- each of X is independently F or CF₃;
- p and p', equal or different each other, are integers from 0 to 3;
- R_{f} is a fluoropolyoxyalkene chain comprising repeating units R°, said repeating units being chosen among the group consisting of :
   (i) -CFXO-, wherein X is F or CF₃,
   (ii) -CF₂CFXO-, wherein X is F or CF₃,
   (iii) -CF₂CF₂CF₂O-,
   (iv) -CF₂CF₂CF₂CF₂O-,
   (v) -(CF₂)ⱼ-CFZ-O- wherein j is an integer chosen from 0 and 1 and Z is a group of general formula -OR_{f}'T₃, wherein R_{f}' is a fluoropolyoxyalkene chain comprising a number of repeating units from 0 to 10, said recurring units being chosen among the followings : -CFXO-, -CF₂CFXO-, -CF₂CF₂ CF₂O-, -CF₂CF₂CF₂CF₂O-, with each of each of X being independently F or CF₃; and T₃ is a C₁ - C₃ perfluoroalkyl group, and mixtures thereof;
- T₁ and T₂, the same or different each other, are H, halogen atoms, C₁-C₃ fluoroalkyl groups, optionally comprising one or more H or halogen atoms different from fluorine.

The expression "fluorinated monomer" is hereby intended to denote an ethylenically unsaturated monomer comprising at least one fluorine atom.

The fluorinated monomer may further comprise one or more other halogen atoms (Cl, Br, I).

Non limiting examples of suitable ethylenically unsaturated fluorinated monomers are:
- C₂-C₈ perfluoroolefins, such as tetrafluoroethylene (TFE), hexafluoropropylene (HFP), perfluoroisobutylene;
- C₂-C₈ hydrogen-containing fluoroolefins, such as trifluoroethylene (TrFE), vinylidene fluoride (VDF), vinyl fluoride (VF), pentafluoropropylene, and hexafluoroisobutylene;
- C₂-C₈ chloro- and/or bromo- and/or iodo-containing fluoroolefins, such as chlorotrifluoroethylene (CTFE) and bromotrifluoroethylene;

- fluoroalkylvinylethers of formula CF₂=CFOR_{f1}, wherein R_{f1} is a C₁-C₆ fluoroalkyl, e.g. -CF₃, -C₂F₅, -C₃F₇;
- fluorooxyalkylvinylethers of formula CF₂=CFOX₀, wherein X₀ is a C₁-C₁₂ fluorooxyalkyl group comprising one or more than one ethereal oxygen atom, including notably fluoromethoxyalkylvinylethers of formula CF₂ =CFOCF₂OR_{f2}, with R_{f2} being a C₁-C₃ fluoro(oxy)alkyl group, such as -CF₂CF₃, -CF₂CF₂-O-CF₃ and -CF₃
- fluorodioxoles, of formula: 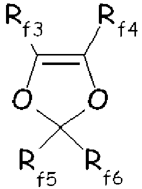 wherein each of R_{f3}, R_{f4}, R_{f5}, R_{f6}, equal or different each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃.

Preferred fluorinated monomers for use in the method of the present invention include tetrafluoroethylene (TFE), chlorotrifluoroethylene (CTFE), hexafluoropropylene (HFP), vinyl fluoride (VF), vinylidene fluoride (VDF), and most preferably TFE or VDF, alone or combined, or in combination with other monomers.

The method of the invention may further involve one or more than one fluorine-free ethylenically unsaturated monomer, also referred to as "hydrogenated monomer". The choice of the said hydrogenated comonomer(s) is not particularly limited; alpha-olefins, (meth)acrylic monomers, vinyl ether monomers, styrenic mononomers may be used.

The method of the present invention may be used to produce a variety of fluoropolymers including perfluoropolymers, which have a fully fluorinated backbone, as well as partially fluorinated fluoropolymers. Also the method of the invention may result in melt-processable fluoropolymers as well as those that are not melt-processable such as for example polytetrafluoroethylene and so-called modified polytetrafluoroethylene. The method of the invention can further yield fluoropolymers that can be cured to make fluoroelastomers as well as fluorothermoplasts. Fluorothermoplasts are generally fluoropolymers that have a distinct and well noticeable melting point, typically in the range of 60 to 320°C or between 100 and 320°C. They thus have a substantial crystalline phase. Fluoropolymers that are used for making fluoroelastomers typically are amorphous and/or have a negligible amount of crystallinity such that no or hardly any melting point is discernable for these fluoropolymers.

The Applicant has found that dispersion (D) are particularly effective for manufacturing thermoplastic vinylidene fluoride polymers by polymerizing vinylidene fluoride (VDF) optionally in combination with one or more than one hydrogenated and/or fluorinated monomer different from VDF, and/or for manufacturing thermoplastic tetrafluoroethylene polymers by polymerizing tetrafluoroethylene (TFE) optionally in combination with one or more than one hydrogenated and/or fluorinated monomer different from TFE.

When the method of the invention comprises emulsion polymerizing vinylidene fluoride (VDF) optionally in combination with one or more than one hydrogenated and/or fluorinated monomer different from VDF, dispersant (D) is generally selected from the group consisting of dispersants (D^{VDF}_{SO3X}), as above detailed.

Similarly, when the method of the invention comprises emulsion polymerizing tetrafluoroethylene (TFE) optionally in combination with one or more than one hydrogenated and/or fluorinated monomer different from TFE, dispersant (D) is generally selected from the group consisting of dispersants (D^{TFE}_{SO3X}), as above detailed.

It is further understood that when dispersants (D^{TFE}_{SO3X}), as above detailed, are used in a method comprising emulsion polymerization of tetrafluoroethylene, said dispersants (D^{TFE}_{SO3X}) are preferably selected among those wherein Xₐ is a metal cation, e.g. Na or K.

Generally speaking, the method of the invention is carried out in the substantial absence of fluorinated emulsifiers having a molecular weight of less than 1000.

The expression "substantial absence" when used in connection to the fluorinated emulsifiers means that no surfactant is purposely added to the polymerization. While impurities possibly qualifying as fluorinated surfactants with a molecular weight of less than 1000 might be tolerated, their amount is generally below of detection limit of standard analytical techniques (< 1 ppm, with respect to the aqueous medium).

More specifically, the method of the invention include polymerizing in an aqueous medium which is substantially free from fluorinated emulsifier [surfactant (FS)] of formula :

R_{f§} (X⁻)ⱼ (M⁺)ⱼ

wherein R_{f§} is a C₃ -C₃₀ (per)fluoroalkyl chain, (per)fluoro(poly)oxyalkylenic chain, X⁻ is -COO⁻, -PO₃⁻ or -SO₃⁻, M⁺ is selected from H⁺, NH₄⁺, an alkaline metal ion and j can be 1 or 2 can be used.

As non-limitative examples of surfactants (FS), mention may be made of ammonium and/or sodium (per)fluoro(oxy)carboxylates, and/or (per)fluoropolyoxyalkylenes having one or more carboxylic end groups.

Examples of fluorinated surfactants , in particular of (per)fluorooxyalkylenic surfactants, are notably described in US 2007015864 (3M INNOVATIVE PROPERTIES) 08.01.2007 , US 2007015865 (3M INNOVATIVE PROPERTIES CO) 18.01.2007 , US 2007015866 (3M INNOVATIVE PROPERTIES CO) 18.01.2007 , US 2007025902 (3M INNOVATIVE PROPERTIES CO) 01.02.2007.

For instance, the fluorinated emulsifiers [surfactant (FS)] substantially excluded from the method of the invention are notably:
- CF₃(CF₂)ₙ₁COOM', in which n₁ is an integer ranging from 4 to 10, preferably from 5 to 7, and more preferably being equal to 6 ; M' represents H, NH₄, Na, Li or K, preferably NH₄ ;
- T(C₃F₆O)ₙ₀(CFXO)ₘ₀CF₂COOM", in which T represents Cl or a perfluoroalkoxyde group of formula CₖF₂ₖ₊₁O with k is an integer from 1 to 3, one F atom being optionally substituted by a Cl atom ; no is an integer ranging from 1 to 6 ; m₀ is an integer ranging from 0 to 6 ; M" represents H, NH₄, Na, Li or K ; X represents F or CF₃ ;

- F-(CF₂-CF₂)ₙ₂-CH₂-CH₂-RO₃M'", in which R is P or S, preferably S, M'" represents H, NH₄, Na, Li or K, preferably H ; n₂ is an integer ranging from 2 to 5, preferably n₂=3 ;
- A-R_{f}-B bifunctional fluorinated surfactants, in which A and B, equal to or different from each other, are -(O)ₚCFX-COOM* ; M* represents H, NH₄, Na, Li or K, preferably M* represents NH₄ ; X = F or CF₃ ; p is an integer equal to 0 or 1; R_{f} is a linear or branched perfluoroalkyl chain, or a (per)fluoropolyether chain such that the number average molecular weight of A-R_{f}-B is in the range 300 to 3,000, preferably from 500 to 2,000;
- R'_{f}-O-(CF₂)ᵣ-O-L-COOM', wherein R'_{f} is a linear or branched perfluoroalkyl chain, optionally comprising catenary oxygen atoms, M' is H, NH₄, Na, Li or K, preferably M' represents NH₄ ; r is 1 to 3; L is a bivalent fluorinated bridging group, preferably -CF₂CF₂- or -CFX-, X = F or CF₃ ;
- R"_{f}-(OCF₂)ᵤ-O-(CF₂)ᵥ-COOM", wherein R"_{f} is a linear or branched perfluoroalkyl chain, optionally comprising catenary oxygen atoms, M" is H, NH₄, Na, Li or K, preferably M" represents NH₄ ; u and v are integers from 1 to 3;
- R"'_{f}-(O)ₜ-CHQ-L-COOM'", wherein R'"_{f} is a linear or branched perfluoroalkyl chain, optionally comprising catenary oxygen atoms, Q = F or CF₃, t is 0 or 1, M'" is H, NH₄, Na, Li or K, preferably M'" is NH₄; L is a bivalent fluorinated bridging group, preferably -CF₂CF₂- or -CFX-, X = F or CF₃;
- cyclic fluorocompound of the following formula (I): 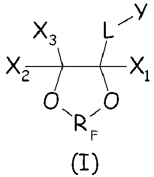
wherein X₁, X₂, X₃, equal or different from each other are independently selected among H, F, and C₁₋₆ (per)fluoroalkyl groups, optionally comprising one or more catenary or non-catenary oxygen atoms; L represents a bond or a divalent group; R_{F} is a divalent fluorinated C₁₋₃ bridging group; Y is a hydrophilic function selected from groups of formulae: 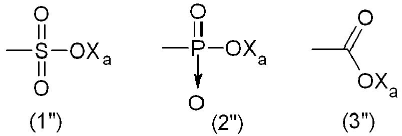 wherein Xₐ is H, a monovalent metal (preferably an alkaline metal) or an ammonium group of formula -N(R'ₙ)₄, wherein R'ₙ, equal or different at each occurrence, represents a hydrogen atom or a C₁₋₆ hydrocarbon group.

The method of the invention typically results in an aqueous dispersion of the fluoropolymer whereas the dispersant (D) has been substantially incorporated in the backbone of the said fluoropolymer, which is another object of the present invention.

In said dispersion of the invention, at least a fraction of fluoropolymer is block copolymer, said block copolymer typically having a structure comprising at least one block (A), derived from dispersant (D) alternated to at least one block (B), derived from polymerization of the fluorinated monomer, that is to say that said fluoropolymer typically comprises, preferably consists of, one or more repeating structures of type (A)-(B). Generally, when dispersant (D) comprises two I and/or Br reactive chain ends, the fluoropolymer has a structure of type (B)-(A)-(B), i.e. comprising a central block (A) having two ends, connected at both ends to a side block (B).

Overall, the weight amount of block(s) derived from dispersant (D) in the fluoropolymer is of generally from 0.1 to 10 % wt, preferably of from 0.2 to 7 % wt, with respect to the total weight of fluoropolymer.

Generally the amount of fluoropolymer in the dispersion directly resulting from the polymerization will vary between 3 % by weight and about 40% by weight depending on the polymerization conditions. A typical range is between 5 and 35% by weight, preferably between 10 and 30% by weight.

The particle size (volume average diameter) of the fluoropolymer is typically between 40 nm and 400 nm with a typical particle size between 60 nm and about 350 nm being preferred.

The fluoropolymer may be isolated from the dispersion by coagulation if a polymer in solid form is desired. Also, depending on the requirements of the application in which the fluoropolymer is to be used, the fluoropolymer may be post-fluorinated so as to convert any thermally unstable end groups into stable CF₃- end groups.

For coating applications, an aqueous dispersion of the fluoropolymer is desired and hence the fluoropolymer will not need to be separated or coagulated from the dispersion. To obtain a fluoropolymer dispersion suitable for use in coating applications such as for example in the impregnation of fabrics or in the coating of metal substrates to make for example cookware, it will generally be desired to add further stabilizing surfactants and/or to further increase the fluoropolymer solids. For example, non-ionic stabilizing surfactants may be added to the fluoropolymer dispersion. Typically these will be added thereto in an amount of 1 to 12 % by weight based on fluoropolymer solids. Examples of non-ionic surfactants that may be added include R¹-O-[CH₂CH₂O]ₙ-[R²O] ₘ-R³ (NS) wherein R¹ represents an aromatic or aliphatic hydrocarbon group having from 6 to 18 carbon atoms, R² represents an alkylene having 3 carbon atoms, R³ represents hydrogen or a C₁₋₃ alkyl group, n has a value of 0 to 40, m has a value of 0 to 40 and the sum of n+m being at least 2. It will be understood that in the above formula (NS), the units indexed by n and m may appear as blocks or they may be present in an alternating or random configuration. Examples of non-ionic surfactants according to formula (NS) above include alkylphenol oxy ethylates such as ethoxylated p-isooctylphenol commercially available under the brand name TRITON™ such as for example TRITON™ X 100 wherein the number of ethoxy units is about 10 or TRITON™ X 114 wherein the number of ethoxy units is about 7 to 8. Still further examples include those in which R¹ in the above formula (NS) represents an alkyl group of 4 to 20 carbon atoms, m is 0 and R³ is hydrogen. An example thereof includes isotridecanol ethoxylated with about 8 ethoxy groups and which is commercially available as GENAPOL^{®} X080 from Clariant GmbH. Non-ionic surfactants according to formula (NS) in which the hydrophilic part comprises a block-copolymer of ethoxy groups and propoxy groups may be used as well. Such non-ionic surfactants are commercially available from Clariant GmbH under the trade designation GENAPOL^{®} PF 40 and GENAPOL^{®} PF 80.

The amount of fluoropolymer solids in the dispersion may be upconcentrated as needed or desired to an amount between 30 and 70% by weight. Any of the known upconcentration techniques may be used including ultrafiltration and thermal upconcentration.

The invention will be now explained in more detail with reference to the following examples, whose purpose is merely illustrative and not intended to limit the scope of the invention.

### Preparative Example 1 - Preparation of dispersant (D-1), of (DVDFSO3X )-type

### Step 1 (A) - Polymerization of tetrafluoroethylene (TFE) and perfluoro-5-sulfonylfluoride-3-oxa-1-pentene (SFVE) in presence of 1,4 diiodo octafluorobutane

In a 5 L autoclave the following reagents were charged:
- 1.9 L of demineralized water;
- 1105 g of a monomer of formula: CF₂=CF-O-CF₂CF₂-SO₂F (SFVE);
- 26.6 mL of a solution containing 1,4 diiodo octafluorobutane dissolved in Galden® PFPE D02 (concentration: 0.33 mL/mL);
- 240 g of a 46 wt% aqueous solution of fluorocompound of formula: 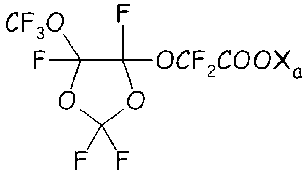 with Xₐ being NH₄.

The autoclave, stirred at 650 rpm, was heated at 60°C. A water based solution with 16 g/L of potassium persulfate was added in a quantity of 90 mL. The pressure was maintained at a value of 12 bar (abs.) by feeding tetrafluoroethylene (TFE).

After adding 68 g of tetrafluoroethylene in the reactor, 40 g of the monomer SFVE were fed to the autoclave; after adding further 22 g of TFE in the reactor, 55 g of monomer SFVE were added every 22 g of TFE consumed by the reaction.

The reaction was stopped after 240 min by stopping the stirring, cooling the autoclave and reducing the pressure by venting the TFE; a total of 450 g of TFE was fed into the autoclave.

A I-(TFE/SFVE)-I oligomer having an equivalent weight of 543 g/mol (TFE: 72.5 mol%; SFVE: 27.5 mol%) and 0.90 wt% of iodinated chain ends was obtained (as characterized notably by NMR), and possessing a Mₙ of about 10,000.

### Step 1 (B) - Hydrolysis and purification of the I-(TFE/SFVE)-I

The latex obtained from Step 1(A) was degassed for 1 night with nitrogen flow to remove monomers' residuals, charged in an agitated glass vessel and heated at 90°C under moderate stirring.

A water based solution of NaOH (5% concentrated) was added drop wise until a molar quantity of NaOH corresponding to 20% of the SO₂F groups present on the polymer is reached. After 30 minutes additional NaOH was added so to obtain a molar ratio 1:4 between the SO₂F groups present in the polymer and NaOH. The dispersion was kept one hour at 90°C under moderate stirring, no coagulation was observed during the whole process. One sample of dispersion was dried in ventilated oven for 1 night and the solid residual was characterized by infrared spectroscopy to confirm that all the SO₂F groups were converted to SO₃Na. No signal of residual SO₂F was detected.

The dispersion cooled at ambient temperature was fed to a column containing resin Dowex Monosphere® 650C UPW previously treated with 1 M nitric acid and washed with demineralized water to remove cations and convert to SO₃H groups the SO₃Na groups of the polymer. In a next step the dispersion was fed in a second column containing Dowex Monosphere® 550A previously treated with 1M NaOH and washed with demineralized water to remove the fluoride generated from the -SO₂F conversion and all other anionic species present in the dispersion. After the treatment the pH of the dispersion was around 2 and was adjusted with addition of diluted NaOH to reach neutrality.

ICP analysis indicated absence of cations different than Na, liquid chromatography analysis indicated absence of fluorides and other anionic species, including absence of fluorinated surfactant. The dispersion of I-TFE-SFVE(SO₃Na)-I was further concentrated by using a reverse osmosis system to get a 12.7% solid content and resulted completely stable. NMR analysis confirmed iodine groups being maintained unaffected as an outcome of this hydrolysis step.

### Working Example 2 : Polymerization of tetrafluoroethylene (TFE) with the dispersant (D-1) of Preparative Example 1

A 5 liters autoclave was deaerated with multiple cycles of vacuum and nitrogen filling, then charged with 2 liters of demineralized water and 390 grams of the dispersion obtained from Preparative Ex. 1 above, corresponding to 49.5 g of dispersant (D-1), after heating at 80°C (stirring at 500 rpm) the autoclave was pressurized with tetrafluoroethylene (TFE) at 12.4 Bar and the reaction was started by feeding 15 ml of a solution containing 6 g/l of potassium persulfate (KPS).

The pressure of the autoclave was maintained at constant value of 12.4 Bar by feeding TFE until a quantity of 600 grams of TFE were fed, after 314 minutes the TFE feeding was stopped. By keeping constant stirring of 500 rpm the autoclave was cooled to ambient temperature the latex was discharged after being kept under nitrogen bubbling for 16 hours to strip away residual monomers from the polymerization, and then stored in a plastic tank. No evidence of latex coagulation/precipitation was observed. An analysis of aqueous phase confirmed absence of dispersant (D-1), hence conveying evidence for dispersant (D-1) having reacted and being completely incorporated in the PTFE dispersion so obtained.

### Preparative Example 3: Preparation of dispersant (D-2), of (DTFESO3X )-type

### Step 3(a) -Polymerization of vinylidene fluoride (VDF) and perfluoro-5-sulfonylfluoride-3-oxa-1-pentene (SFVE) in presence of 1,4 diiodo-octafluorobutane.

In a 5 L autoclave the following reagents were charged:
- 2.6 L of demineralized water;
- 116 g of the monomer SFVE, as above detailed;
- 26.6 mL of a solution containing 1,4 diiodo octafluorobutane dissolved in Galden® PFPE D02 (concentration: 0.33 mL/mL);
- 48 g of a 46 wt% aqueous solution of fluorocompound of formula: 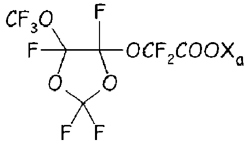 with Xₐ being NH₄.

The autoclave, stirred at 650 rpm, was heated at 60°C. A water based solution with 6 g/L of potassium persulfate was added in a quantity of 66 mL. The pressure was maintained at a value of 12 bar (abs.) by feeding vinylidene fluoride (VDF).

After adding 33 g of vinylidene fluoride in the reactor, 23 g of the monomer SFVE were fed to the autoclave every 33 g of vinylidene fluoride consumed by the reaction.

The reaction was stopped after 370 min by stopping the stirring, cooling the autoclave and reducing the pressure by venting the VDF; a total of 660 g of VDF was fed into the autoclave.

A I-(VDF/SFVE)-I copolymer having an equivalent weight of 602 g/mol (VDF: 83.4 mol%; SFVE: 16.6 mol%) and 0.82 wt% of iodinated chain ends was obtained (as characterized by NMR).

Gel permeation chromatography analysis indicated Mn=7800, Mw=11500 and polydispersity 1.5 for this compound.

### Step 3(b) -Hydrolysis and purification of the I-(VDF/SFVE)-I

The latex obtained in Step 3(a) was degassed for 1 night with nitrogen flow to remove monomers' residuals, charged in an agitated glass vessel and heated at 90°C under moderate stirring.

A water based solution of NH₄OH (2% concentrated) was added drop wise until a molar quantity of NH₄OH corresponding to 20% of the SO₂F groups present on the polymer is reached. After 60 minutes additional NH₄OH (5% concentrated) was added so to obtain a molar ratio 1:4 between the SO₂F groups present in the polymer and NH₄OH. The dispersion was kept one hour at 90°C under moderate stirring, no coagulation was observed during the whole process.

One sample of dispersion was dried in ventilated oven for 1 night and the solid residual was characterized by infrared spectroscopy to confirm that all the SO₂F groups were converted to SO₃NH₄. No signal of residual SO₂ F was detected. The dry polymer in white indicating absence of dehydrofluorination of the VDF sequences. The dispersion cooled at ambient temperature was fed to a column containing resin Dowex Monosphere® 650C UPW previously treated with 1 M nitric acid and washed with demineralized water to remove cations and convert to SO₃H groups the SO₃NH₄ groups of the polymer. In a next step the dispersion was fed in a second column containing Dowex Monosphere® 550A previously treated with 1M NaOH and washed with demineralized water to remove the fluoride generated from the SO₂F conversion and other anionic species present in the dispersion. After the treatment the pH of the dispersion was around 2 and was adjusted with addition of diluted NaOH to reach neutrality.

ICP analysis indicated absence of cations different than Na, liquid chromatography analysis indicated absence of fluorides and other anionic species, including absence of fluorosurfactant.

The dispersion of the compound I-VFD-SFVE(SO₃Na)-I was concentrated by using a reverse osmosis system to get a 8.33% solid content and resulted completely stable (absence of coagulation). NMR analysis confirmed iodine groups being maintained unaffected as an outcome of this hydrolysis step.

### Working Example 4 : Polymerization of vinylidene fluoride (VDF) with the dispersant (D-2) of Preparative Example 3

Into a 7.5 liter, a horizontally disposed stainless steel reactor was charged 5.23 kg of deionized water, 0.250 kg of an aqueous dispersion obtained in Preparative Example 3.

The reactor was agitated and temperature was raised to about 60°C. The reactor was then charged with 0.004 kg of paraffin wax, subsequently raising temperature to 122.5°C. The reactor was sealed, purged, and vinylidene fluoride (VDF) monomer was charged to a pressure of about 44.8 bar. The total amount of 30mL ditertbutyl hydroperoxide (DTBP) as initiator was added as a whole.

The reactor pressure was maintained at about 44-46 bar by the addition of VDF as needed. The feed of the monomer was stopped after 220 minutes, after 1.0 kg VDF had been fed to the reactor. Maintaining slow agitation, the reactor was cooled down to room temperature and vented.

The latex was discharged and reactor was rinsed by water. No signals of latex coagulation/precipitation were observed. An analysis of aqueous phase confirmed absence of dispersant (D-2), hence conveying evidence for dispersant (D-2) having reacted and being completely incorporated in the PVDF dispersion so obtained.

## Claims

1. A method for making a fluoropolymer comprising emulsion polymerizing one or more than one fluorinated monomer in an aqueous medium wherein said aqueous emulsion polymerization is carried out in an aqueous medium in the presence of at least one radical initiator and at least one reactive oligomeric dispersant [dispersant (D)], said dispersant (D):
- comprising a backbone chain comprising recurring units derived from one or more ethylenically unsaturated monomers,
- having a number averaged molecular weight of at least 3 000 and of at most 30 000,
- comprising at least one iodine or bromine atom; and
- comprising a plurality of ionisable groups selected from the group consisting of -SO₃Xₐ, -PO₃Xₐ and -COOXₐ, whereas Xₐ is H, an ammonium group or a monovalent metal,
wherein the said dispersant (D) is used in an amount of 0.01% by weight and 3.50% by weight, based on the total weight of the aqueous medium.

2. The method of Claim 1, wherein the amount of dispersant (D) is of at least 0.05% wt, preferably of at least 0.10 % wt and/or of at most 3.20 % wt, preferably at most 3.00 % wt, with respect to the total weight of the aqueous medium.

3. The method of Claim 1 or 2, wherein the dispersant (D) possesses a number averaged molecular weight of at least 4000, preferably of at least 5000 and/or of at most 25 000, preferably of at most 20 000.

4. The method of anyone of the preceding claims, wherein the said at least one iodine or bromine atom is comprised as terminal group of the dispersant (D) backbone chain

5. The method of anyone of the preceding claims, wherein the dispersant (D) comprises said at least one iodine and/or bromine atom in an amount of 0.01 to 10% wt, with respect to the total weight of the dispersant (D).

6. The method of anyone of the preceding claims, wherein the amount of said ionisable groups in dispersant (D) is of at least 0.15, preferably at least 0.50, more preferably at least 0.75 meq/g, with respect to the weight of dispersant (D) and/or of at most 2.50 meq/g, preferably at most 2.20 meq/g, more preferably at most 2.00 meq/g, , with respect to the weight of dispersant (D).

7. The method according to anyone of the preceding claims, wherein dispersant (D) is an oligomer comprising at least one -SO₃Xₐ group [dispersant (D_{SO3X})], and is preferably selected from oligomers comprising recurring units deriving from at least one ethylenically unsaturated fluorinated monomer containing at least one -SO₂X group, with X being -OXₐ, with Xₐ being H, an ammonium group or a monovalent metal; F or Cl (monomer (A), hereinafter); and recurring units deriving from at least one ethylenically unsaturated fluorinated monomer free from -SO₂X group, as above described (monomer (B), hereinafter).

8. The method according to Claim 7, wherein at least one monomer (B) of the dispersant (D_{SO3X}) is tetrafluoroethylene (TFE) and wherein said dispersant (D _{SO3X}) is preferably selected from oligomers consisting essentially of:
(1) recurring units derived from tetrafluoroethylene (TFE), these recurring units (1) being generally in an amount of 50 to 99 % moles, preferably 52 to 98 % moles, with respect to total moles of dispersant (D^{TFE}_{SO3X});
(2) recurring units derived from at least one monomer selected from the group consisting of:
(j) sulfonyl halide fluorovinylethers of formula: CF₂=CF-O-(CF₂)ₘSO₂X, with X being OXₐ, with Xₐ being H, an ammonium group or a monovalent metal; F or Cl; preferably F; wherein m is an integer between 1 and 10, preferably between 1 and 6, more preferably between 2 and 4, even more preferably m equals 2;
(jj) sulfonyl fluoride fluoroalkoxyvinylethers of formula: CF₂=CF-(OCF₂CF(R_{F1} ))_{w}-O-CF₂(CF(R_{F2}))_{y}SO₂X
with X being OXₐ, with Xₐ as above detailed; F or Cl; preferably F; wherein w is an integer between 0 and 2, R_{F1} and R_{F2}, equal or different from each other, are independently F, Cl or a C₁-C₁₀ fluoroalkyl group, optionally substituted with one or more ether oxygens, y is an integer between 0 and 6; preferably w is 1, R_{F1} is -CF₃, y is 1 and R_{F2} is F; and
(jjj) mixtures thereof;
these recurring units (2) being generally in an amount of 1 to 50 % moles, preferably 2 to 48 % moles, with respect to total moles of dispersant (D^{TFE} _{SO3X}) ; and
(3) optionally, recurring units derived from at least one hydrogenated and/or fluorinated monomer different from TFE, preferably a perfluorinated monomer, generally selected from the group consisting of hexafluoropropylene, perfluoroalkylvinylethers of formula CF₂=CFOR'_{f1}, wherein R'_{f1} is a C₁-C₆ perfluoroalkyl, e.g. -CF₃, -C₂F₅, -C₃F₇; perfluoro-oxyalkylvinylethers of formula CF₂=CFOR'_{O1}, wherein R'_{O1} is a C₂-C₁₂ perfluoro-oxyalkyl having one or more ether groups, including e.g. perfluoroalkyl-methoxy-vinylethers of formula CF₂=CFOCF₂OR'_{f2} in which R'_{f2} is a C₁-C₆ perfluoroalkyl, e.g. -CF₃, -C₂F₅, -C ₃F₇ or a C₁-C₆ perfluorooxyalkyl having one or more ether groups, like -C₂F₅ -O-CF₃; these recurring units (3) being generally in an amount of 0 to 45 % moles, preferably 0 to 40 % moles, with respect to total moles of dispersant (D ^{TFE}_{SO3X}).

9. The method according to Claim 8, wherein dispersant (D) is selected from the group consisting of dispersants (D^{TFE}_{SO3X}) consisting essentially of:
(1) from 55 to 95 % moles, preferably from 65 to 93 % moles of recurring units derived from TFE;
(2) from 5 to 45 % moles, preferably from 7 to 35 % moles of recurring units derived from -SO₂X groups-containing monomer(s) (2), as detailed in Claim 8;
(3) from 0 to 25 % moles, preferably from 0 to 20 % moles of recurring units derived from fluorinated monomer(s) different from TFE (3), as detailed in Claim 8.

10. The method according to Claim 7, wherein at least one monomer (B) of the dispersant (D_{SO3X}) is vinylidene fluoride (VDF) and wherein said dispersant (D _{SO3X}) is preferably selected from oligomers consisting essentially of:
(1) recurring units derived from vinylidene fluoride (VDF), these recurring units (1) being generally in an amount of 55 to 99 % moles, preferably 75 to 95 % moles, with respect to total moles of dispersant (D^{VDF}_{SO3X});
(2) recurring units derived from at least one monomer selected from the group consisting of:
(j) sulfonyl halide fluorovinylethers of formula: CF₂=CF-O-(CF₂)ₘSO₂X, with X being OXₐ, with Xₐ Xₐ being H, an ammonium group or a monovalent metal; F or Cl; preferably F; wherein m is an integer between 1 and 10, preferably between 1 and 6, more preferably between 2 and 4, even more preferably m equals 2;
(jj) sulfonyl fluoride fluoroalkoxyvinylethers of formula: CF₂=CF-(OCF₂CF(R_{F1} ))_{w}-O-CF₂(CF(R_{F2}))_{y}SO₂X
with X being OXₐ, with Xₐ Xₐ being H, an ammonium group or a monovalent metal; F or Cl; preferably F; wherein w is an integer between 0 and 2, R_{F1} and R_{F2}, equal or different from each other, are independently F, Cl or a C₁₋C₁₀ fluoroalkyl group, optionally substituted with one or more ether oxygens, y is an integer between 0 and 6; preferably w is 1, R_{F1} is -CF₃, y is 1 and R_{F2} is F; and
(jjj) mixtures thereof;
these recurring units (2) being generally in an amount of 1 to 45 % moles, preferably 5 to 25 % moles, with respect to total moles of dispersant (D^{VDF} _{SO3X}) ; and
(3) optionally, recurring units derived from at least one hydrogenated monomer or fluorinated monomer different from VDF; these recurring units (3) being generally in an amount of 0 to 25 % moles, preferably 0 to 15 % moles, with respect to total moles of dispersant (D^{VDF}_{SO3X}).

11. The method according to Claim 10, wherein dispersant (D) is selected from the group consisting of dispersants (D^{VDF}_{SO3X}) consisting essentially of:
(1) from 55 to 95 % moles, preferably from 70 to 92 % moles of recurring units derived from VDF;
(2) from 5 to 30 % moles, preferably from 8 to 20 % moles of recurring units derived from -SO₂X groups-containing monomer(s) (2), as detailed in Claim 10;
(3) from 0 to 15 % moles, preferably from 0 to 10 % moles of recurring units derived from hydrogenated or fluorinated monomer(s) different from VDF (3), as detailed in Claim 10.

12. The method according to anyone of the preceding claims, wherein the fluorinated monomer is selected from the group consisting of:
- C₂-C₈ perfluoroolefins, such as tetrafluoroethylene (TFE), hexafluoropropylene (HFP), perfluoroisobutylene;
- C₂-C₈ hydrogen-containing fluoroolefins, such as trifluoroethylene (TrFE), vinylidene fluoride (VDF), vinyl fluoride (VF), pentafluoropropylene, and hexafluoroisobutylene;
- C₂-C₈ chloro- and/or bromo- and/or iodo-containing fluoroolefins, such as chlorotrifluoroethylene (CTFE) and bromotrifluoroethylene;
- fluoroalkylvinylethers of formula CF₂=CFOR_{f1}, wherein R_{f1} is a C₁-C₆ fluoroalkyl, e.g. -CF₃, -C₂F₅, -C₃F₇;
- fluorooxyalkylvinylethers of formula CF₂=CFOX₀, wherein X₀ is a C₁-C₁₂ fluorooxyalkyl group comprising one or more than one ethereal oxygen atom, including notably fluoromethoxyalkylvinylethers of formula CF₂=CFOCF₂OR_{f2}, with R_{f2} being a C₁-C₃ fluoro(oxy)alkyl group, such as -CF₂CF₃, -CF₂CF₂ -O-CF₃ and -CF₃
- fluorodioxoles, of formula: 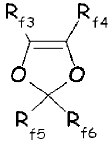
wherein each of R_{f3}, R_{f4}, R_{f5}, R_{f6}, equal or different each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂ CF₂OCF₃.

13. The method according to anyone of the preceding claims, wherein the method comprises emulsion polymerizing vinylidene fluoride (VDF) optionally in combination with one or more than one hydrogenated and/or fluorinated monomer different from VDF, and wherein preferably dispersant (D) is selected from the group consisting of dispersants (D^{VDF}_{SO3X}), as detailed in Claim 10 or 11.

14. The method according to anyone of the preceding claims, wherein the method comprises emulsion polymerizing tetrafluoroethylene (TFE) optionally in combination with one or more than one hydrogenated and/or fluorinated monomer different from TFE, and wherein preferably dispersant (D) is selected from the group consisting of dispersants (D^{TFE}_{SO3X}), as detailed in Claim 8 or 9.

15. The method according to anyone of the preceding claims, wherein the method is carried out in substantial absence of fluorinated emulsifiers having a molecular weight of less than 1000.

16. A fluoropolymer dispersion obtained from the method according to anyone of the preceding claims.
